# EUROPEAN PATENT APPLICATION

(11) **EP 2 952 682 A1**
(43) Date of publication of application: **09.12.2015**
(21) Application number: 15170627.2
(22) Date of filing: 04.06.2015
(51) Int. Cl.: F01D 5/14, F01D 5/18

(54) **AIRFOIL FOR A GAS TURBINE ENGINE WITH A COOLED PLATFORM**

(30) Priority: 06.06.2014 US 201462008599 P
(71) Applicant: United Technologies Corporation, Hartford, CT 06101 (US)
(72) Inventor: CHLUS, Wieslaw A., Wethersfield, CT Connecticut 06109 (US); THOMEN, Seth J., Colchester, CT Connecticut 06415 (US)
(74) Representative: Hull, James Edward

(57) **Abstract**

An airfoil (78) for a gas turbine engine (10) includes an airfoil (78) that extends from a platform (76) that has first and second circumferential sides (86, 88) that respectively extend to first and second circumferential edges (92, 94). The first circumferential side (86) has a tapered surface (90) at a first angle (100) relative to a flow path surface. The second circumferential side (88) has a cooling hole (98) that extends toward the second lateral edge (94) at a second angle (96) relative to the flow path surface. The tapered surface (90) and the cooling hole (98) are axially aligned with one another.

## Description

### BACKGROUND

This disclosure relates to a gas turbine engine airfoil, and more particularly, a platform cooling arrangement.

Industrial gas turbine engines include a compressor section, a combustor section and a turbine section. Air entering the compressor section is compressed and delivered into the combustor section where it is mixed with fuel and ignited to generate a high-speed exhaust gas flow. The high-speed exhaust gas flow expands through the turbine section to drive the compressor and a power turbine. The compressor and turbine sections each included multiple circumferential arrays of blades and vanes.

The turbine section in particular is subject to high temperatures that may exceed the melting temperature of the components. To this end, these components are cooled by one or more cooling mechanisms. Airfoils extend from a platform, and in the case of a blade, an inner platform supported by a root section. The airfoil and platform typically included cooling holes to supply cooling fluid to the hotter areas of the blade.

As gas turbine engines are pushed to higher temperatures to increase power output and efficiency, distress of the airfoil platforms increasingly becomes the service life limiting area. A typical solution to this includes decreasing the platform metal temperatures with cooling air. One approach includes providing platform cooling holes supplied with "wheel-space air," which corresponds to fluid provided between adjacent turbine blade shanks. This approach may supply insufficient pressure needed for adequate film cooling to the local and adjacent platform. Another approach includes providing cooling to the platform mate faces, or facing edges, supplied by cooling air from the airfoil core and/or "wheel-space air." This approach may not provide film cooling and subjects the area to cracking due to reduced wall thickness.

### SUMMARY

In one exemplary embodiment, an airfoil for a gas turbine engine includes an airfoil that extends from a platform that has first and second circumferential sides that respectively extend to first and second circumferential edges. The first circumferential side has a tapered surface at a first angle relative to a flow path surface. The second circumferential surface has a cooling hole that extends toward the second lateral edge at a second angle relative to the flow path surface. The tapered surface and the cooling hole are axially aligned with one another.

In a further embodiment of the above, the airfoil includes a cooling passage. The cooling hole is in fluid communication with the cooling hole.

In a further embodiment of any of the above, the second angle is 5-40°.

In a further embodiment of any of the above, the second angle is 15-30°.

In a further embodiment of any of the above, multiple cooling holes are arranged in a cluster. The cluster is arranged near a trailing edge of the airfoil on a pressure side.

In a further embodiment of any of the above, the cluster is arranged within about three inches (76.2 mm) of an aft edge of the platform.

In a further embodiment of any of the above, the cluster is within about 0.6 inch (15.2 mm) of the second lateral edge.

In a further embodiment of any of the above, the cooling holes each have a diameter equivalent of 0.010-0.050 inch (0.25-1.27 mm).

In a further embodiment of any of the above, the first angle is 1-20°.

In a further embodiment of any of the above, the first angle is 2-15°.

In a further embodiment of any of the above, the tapered surface extends within about three inches (76.2 mm) of the first circumferential edge to an aft edge of the platform.

In a further embodiment of any of the above, the tapered surface extends less that 0.7 inch (17.78 mm) from the first circumferential edge.

In a further embodiment of any of the above, the airfoil is a turbine blade.

In another exemplary embodiment, an array of airfoils for a gas turbine engine includes adjacent airfoils. Each airfoil extends from a platform that has first and second circumferential sides respectively that extend to first and second circumferential edges. The first circumferential side has a tapered surface at a first angle relative to a flow path surface. The second circumferential surface has a cooling hole that extends toward the second lateral edge at a second angle relative to the flow path surface. The tapered surface and the cooling hole are axially aligned with one another.

In a further embodiment of the above, the airfoils include a cooling passage. The cooling hole is in fluid communication with the cooling passage.

In a further embodiment of any of the above, the second angle is 5-40° and comprises multiple cooling holes that are arranged in a cluster. The cluster is arranged near a trailing edge of the airfoil on a pressure side.

In a further embodiment of any of the above, the cluster is arranged within about three inches (76.2 mm) of an aft edge of the platform. The cluster is within about 0.6 inch (15.2 mm) of the second lateral edge. The cooling holes each have a diameter equivalent of 0.010-0.050 inch (0.25-1.27 mm).

In a further embodiment of any of the above, the first angle is 1-20°.

In a further embodiment of any of the above, the tapered surface extends within about three inches (76.2 mm) of the first circumferential edge to an aft edge of the platform. The tapered surface extends less that 0.7 inch (17.78 mm) from the first circumferential edge.

In a further embodiment of any of the above, the airfoil is a turbine blade.

### BRIEF DESCRIPTION OF THE DRAWINGS

The disclosure can be further understood by reference to the following detailed description when considered in connection with the accompanying drawings wherein:
Figure 1 is a schematic cross-sectional view of an example industrial gas turbine engine.
Figure 2 schematically illustrates a section of the gas turbine engine, such as a turbine section.
Figures 3A and 3B are perspective and elevational views respectively of adjacent blades.
Figure 4 is an elevational view of the blade shown in Figures 3A and 3B.
Figure 5 is an enlarged cross-sectional view of the adjacent blades.

The embodiments, examples and alternatives of the preceding paragraphs, the claims, or the following description and drawings, including any of their various aspects or respective individual features, may be taken independently or in any combination. Features described in connection with one embodiment are applicable to all embodiments, unless such features are incompatible.

### DETAILED DESCRIPTION

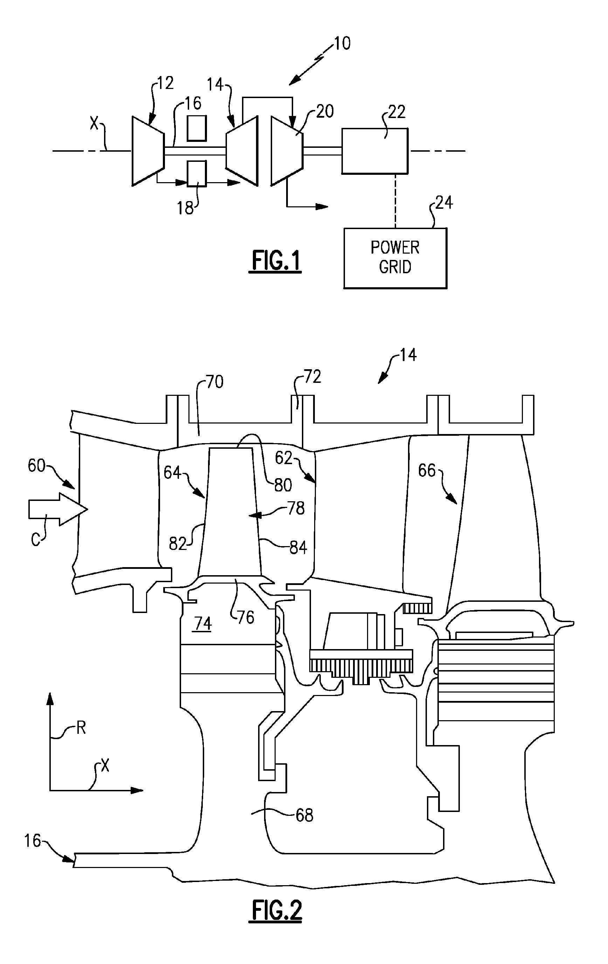

A schematic view of an industrial gas turbine engine 10 is illustrated in Figure 1. The engine 10 includes a compressor section 12 and a turbine section 14 interconnected to one another by a shaft 16 rotatable about an axis X. A combustor 18 is arranged between the compressor and turbine sections 12, 14. A generator 22 is rotationally driven by a shaft coupled to the turbine or uncoupled via a power turbine 20, which is connected to a power grid 23. It should be understood that the illustrated engine 10 is highly schematic, and may vary from the configuration illustrated. Moreover, the disclosed airfoil may be used in commercial and military aircraft engines as well as industrial gas turbine engines.

The turbine section 14 includes multiple turbine blades, one of which is illustrated at 64 in Figure 2. In the example turbine section 14, first and second arrays of circumferentially spaced fixed vanes 60, 62 are axially spaced apart from one another. A first stage array of circumferentially spaced turbine blades 64, mounted to a rotor disk 68, is arranged axially between the first and second fixed vane arrays. A second stage array of circumferentially spaced turbine blades 66 is arranged aft of the second array of fixed vanes 62. It should be understood that any number of stages may be used. Moreover, the disclosed airfoil may be used in a compressor section, turbine section and/or fixed or rotating stages.

The turbine blades each include a tip 80 adjacent to a blade outer air seal 70 of a case structure 72, which provides an outer flow path. The first and second stage arrays of turbine vanes and first and second stage arrays of turbine blades are arranged within a core flow path C and are operatively connected to the shaft 16, for example.

Each blade 64 includes an inner platform 76 respectively defining an inner flow path. The platform inner platform 76 supports an airfoil 78 that extends in a radial direction R. It should be understood that the turbine blades may be discrete from one another or arranged in integrated clusters. The airfoil 78 provides leading and trailing edges 82, 84.

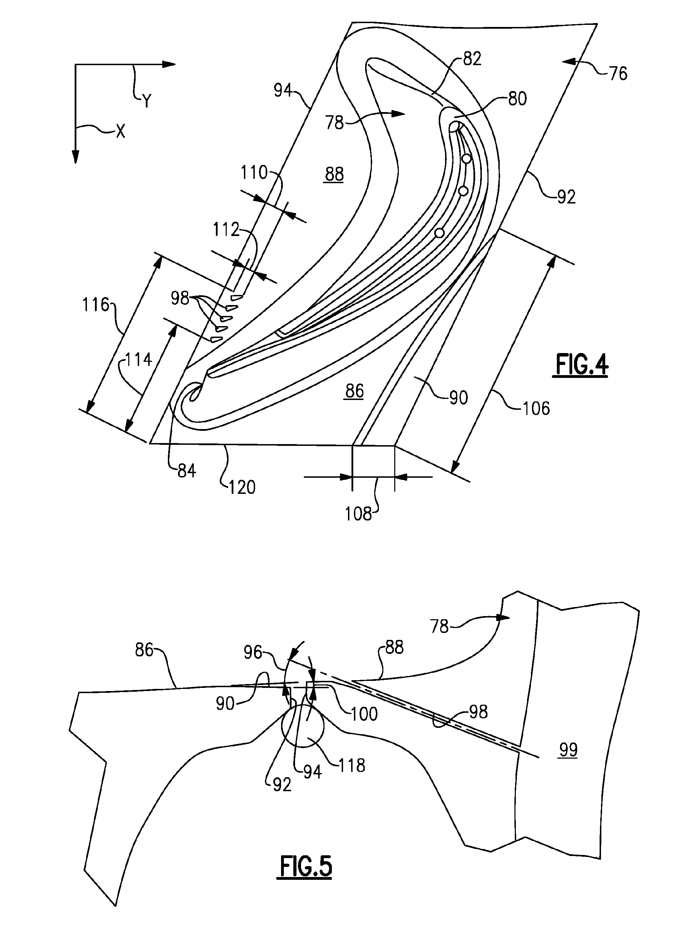

The airfoil 78 is provided between pressure (typically concave) and suction (typically convex) sides in circumferential direction Y (Figure 4) provided between the leading and trailing edges 82, 84. The turbine blades 64 are constructed from a high strength, heat resistant material such as a nickel-based or cobalt-based superalloy, or of a high temperature, stress resistant ceramic or composite material. In cooled configurations, internal fluid passages and external cooling apertures provide for a combination of impingement and film cooling. Other cooling approaches may be used such as trip strips, pedestals or other convective cooling techniques. In addition, one or more thermal barrier coatings, abrasion-resistant coatings or other protective coatings may be applied to the turbine vane 64.

The airfoil 78 extends from the platform 76 and provides first and second circumferential sides, which corresponds to pressure and suction sides 86, 88, as shown in Figure 4. With continued reference to Figure 4, the first and second circumferential sides 86, 88 include first and second circumferential edges 92, 94, respectively. This first circumferential side 86 has a tapered surface 90 at a first angle 100 relative to the flowpath surface provided by the platform 76. The first angle is 1-20 degrees, and in another example, 2-15 degrees. In still another example, the first angle is 2-12 degrees.

The tapered surface 90 extends within about three inches (76.2 mm) of the first circumferential edge 92 to an aft edge 120 of the platform 76. The tapered surface 90 extends a width 108 less that 0.7 inch (17.78 mm) from the first edge 92.

The second circumferential surface 88 has at least one cooling hole 98, for example, a cluster of cooling holes, extending toward the second circumferential edge 92 at a second angle 96 relative to the flowpath surface. As shown in Figure 5, the airfoil 78 includes a cooling passage 99 in fluid communication with the cooling hole 98. In one example, the second angle 96 is 5-40 degrees, in another example, the second angle 96 is 15-30 degrees.

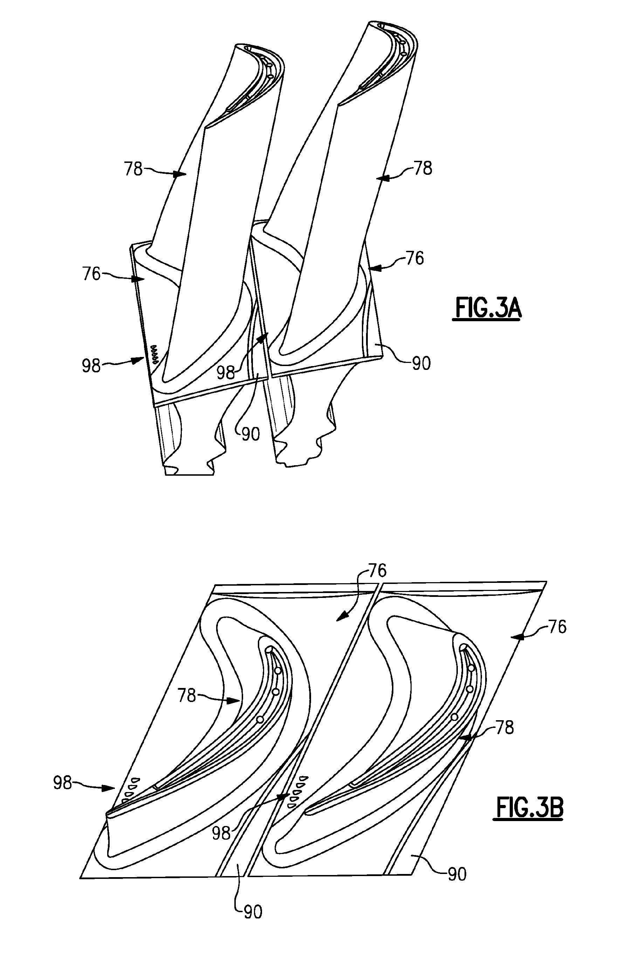

The tapered surface 90 and the cooling hole 98 are axially aligned with one another such that cooling fluid from the cooling hole 98 is directed toward the tapered surface 90. The cooling arrangement provides for a more effective platform cooling. The relationship between these features and adjacent blades is shown in Figures 3A-3B.

The cluster of cooling holes 98 is arranged within about 3 inches (76.2 mm) of an aft edge 120 of the platform 76. The cluster is within about 0.60 inch (15.2 mm) of the second lateral edge 90. A lateral offset 110 is about 0.60 inch (15.2 mm), and a lateral width 112 is at least 0.010 inch (0.25 mm). Each cooling hole 98 has an effective diameter, or diameter equivalent of 0.010 - 0.050 inch (0.25 -1.27 mm). The cluster includes an axial offset 114 from the aft edge 120 of about 1 inch (25.4 mm) and may extend a distance 116, which is less than three inches (76.2 mm). The cooling holes may be round or shaped. The holes may have a uniform cross-section or may be shaped as diffusers.

A seal 118 may be provided between adjacent blades 64 to obstruct the gap provided between the facing circumferential edges 92, 94. The seal 118 is schematically illustrated and may be provided using any suitable arrangement.

It should also be understood that although a particular component arrangement is disclosed in the illustrated embodiment, other arrangements will benefit herefrom. Although particular step sequences are shown, described, and claimed, it should be understood that steps may be performed in any order, separated or combined unless otherwise indicated and will still benefit from the present invention.

Although the different examples have specific components shown in the illustrations, embodiments of this invention are not limited to those particular combinations. It is possible to use some of the components or features from one of the examples in combination with features or components from another one of the examples.

Although an example embodiment has been disclosed, a worker of ordinary skill in this art would recognize that certain modifications would come within the scope of the claims. For that reason, the following claims should be studied to determine their true scope and content.

## Claims

1. An airfoil (78) for a gas turbine engine (10) comprising:
an airfoil (78) extending from a platform (76) that has first and second circumferential sides (86, 88) respectively extending to first and second circumferential edges (92, 94), the first circumferential side (86) having a tapered surface (90) at a first angle (100) relative to a flow path surface, and the second circumferential side (88) having a cooling hole (98) extending toward the second circumferential edge (94) at a second angle (96) relative to the flow path surface, the tapered surface (90) and the cooling hole (98) axially aligned with one another.

2. The airfoil according to claim 1, wherein the airfoil (78) includes a cooling passage (99), the cooling hole (98) in fluid communication with the cooling passage (99).

3. The airfoil according to claim 1 or 2, wherein the second angle (96) is 5-40°.

4. The airfoil according to claim 3, wherein the second angle (96) is 15-30°.

5. The airfoil according to any preceding claim, comprising multiple cooling holes (98) arranged in a cluster, the cluster arranged near a trailing edge (84) of the airfoil (78) on a pressure side (88).

6. The airfoil according to claim 5, wherein the cluster is arranged within about three inches (76.2 mm) of an aft edge (120) of the platform (76).

7. The airfoil according to claim 5 or 6, wherein the cluster is within about 0.6 inch (15.2 mm) of the second circumferential edge (94).

8. The airfoil according to claim 5, 6 or 7, wherein the cooling holes (98) each have a diameter equivalent of 0.010-0.050 inch (0.25-1.27 mm).

9. The airfoil according to any preceding claim, wherein the first angle (100) is 1-20°.

10. The airfoil according to claim 9, wherein the first angle (100) is 2-15°.

11. The airfoil according to any preceding claim, wherein the tapered surface (90) extends within about three inches (76.2 mm) of the first circumferential edge (92) to an/the edge (120) of the platform (76).

12. The airfoil according to claim 11, wherein the tapered surface (90) extends less that 0.7 inch (17.78 mm) from the first circumferential edge (92).

13. The airfoil according to any preceding claim, wherein the airfoil (78) is a turbine blade (64).

14. An array of airfoils (78) for a gas turbine engine (10) comprising adjacent airfoils (78), each airfoil (78) according to any preceding claim.
